Europäisches Patentamt

European Patent Office

Office européen des brevets

(11) Veröffentlichungsnummer: **0 030 357**
**A2**

(12) **EUROPÄISCHE PATENTANMELDUNG**

(21) Anmeldenummer: 80107535.9

(22) Anmeldetag: 02.12.80

(51) Int. Cl.³: **H 02 K 7/18, F 03 D 9/00**

(30) Priorität: 06.12.79 AT 7720/79

(43) Veröffentlichungstag der Anmeldung: **17.06.81**
**Patentblatt 81/24**

(84) Benannte Vertragsstaaten: **AT CH DE FR LI**

(71) Anmelder: **SIEMENS AKTIENGESELLSCHAFT** Berlin und München, Postfach 22 02 61, **D-8000 München 22 (DE)**

(72) Erfinder: **Biebl, Hans, Dipl.-Ing.,**
**Friedrich-Schmidl-Gasse 13, A-3011 Untertullnerbach (AT)**
Erfinder: **Pötsch, Karl, Am Modenapark 8-9, A-1030 Wien (AT)**

(54) **Windkraftrad-Stromgenerator.**

(57) Um insbesondere bei kleineren Windkrafträdern, die als Stromgeneratoren verwendet werden, aufwendige Getriebe zu vermeiden und bei einfacher, kompakter Bauweise eine hohe Betriebssicherheit, Wartungsfreiheit und hohen Wirkungsgrad zu erreichen, ist ein Windkraftrad mit einem Savonius-Rotor (1) vorgesehen, der mit einer Vertikalachse (2) versehen ist und mindestens in einem Teil seines Gesamtvolumens als Läufer einer magnetelektrischen Maschine ausgebildet ist.

SIEMENS AKTIENGESELLSCHAFT
Berlin und München

Unser Zeichen
VPA 79 P 9641 EUR

## Windkraftrad-Stromgenerator

Die Erfindung betrifft einen Windkraftrad-Stromgenerator
mit Savonius-Rotor. Die Verwendung von Windkraftgeneratoren zur Erzeugung elektrischer Energie ist bereits
seit langer Zeit bekannt. Zu den Hauptproblemen derartiger Anlagen zählt die erforderliche Umsetzung der
meist geringen Drehzahl der Windkraftmaschine in die
hohen Drehzahlbereiche, die zur Erzeugung elektrischer
Energie durch die bekannten Generatoren mit vertretbarem
Wirkungsgrad erforderlich sind. Es ist daher im Laufe
der letzten Jahrzehnte eine große Zahl der verschiedensten Lösungsversuche bekanntgeworden, die in den meisten
Fällen die Einführung eines - allerdings auch wieder
leistungsverbrauchenden - Getriebes erforderlich macht.
Im Zuge dieser Entwicklung wurde allerdings schon einmal vorgeschlagen, einen "aerodynamischen Transformator"
einzusetzen, welcher nach dem Prinzip des Flettner-Rotors
arbeitet, wobei vier oder mehrere solcher Rotoren als die
Arme eines Windrades vorgesehen sind, an deren Enden
windmühlenartige Läufer mit direkt angesetzten Stromerzeugern angeordnet sind, welche mittelbar durch die
Drehbewegung der Rotoren gegenüber der senkrecht zur
Windrichtung ruhenden Luft in Bewegung versetzt werden.
Eine derartige Anordnung ist beispielsweise in "Luegers
Lexikon der gesamten Technik" (Deutsche Verlagsanstalt Stuttgart, 1929) beschrieben und zeigt, daß der
geschilderte Sachverhalt bereits zum damaligen Zeitpunkt
(Seite 918, a.a.O.) bekannt war.

Gud 2 Gr / 27.5.80

0030357

Wenn auch immer wieder von Großkraftanlagen zur Umsetzung von Wind- in elektrische Energie die Rede war,
muß doch bedacht werden, daß sich Windkraftgeneratoren
ihrem Wesen nach vorwiegend für Kleinverbraucher eignen.
Die Tatsache beispielsweise, daß Änderungen der Winrichtung, die in vielen Gegenden zu erwarten sind, im
Zusammenwirken mit der Drehbewegung der rotierenden
Massen der Generatoren zu großen Kreiselmomenten führen
müssen, daß des weiteren die weite Ausladung der antriebserzeugenden Flügelelemente sowie die auf sie wirkenden
Knickmomente sehr spezielle Konstruktionen erforderlich
machen, läßt zumindest beim ersten Anblick des Problems
das Gefühl aufkommen, daß hier technische Lösungen im
Sinn einer harmonischen Ausnützung von Material und
Geometrie nur schwer zu erwarten sein werden. Ein weiteres
Problem von Groß-Windkraftanlagen ist die unerlässliche
Wartung und die damit verbundene Betriebspflege, die
zusätzlich zur Unsicherheit der Windverhältnisse die
gesamte Leistungszeit begrenzt.

Aus dem Gesagten folgt, daß es zweckmäßig ist, sowohl
das Risiko als auch den Aufwand für eine einzige
Groß-Windkraftanlage auf eine große Anzahl kleiner,
mit entsprechend geringer Leistung arbeitender Einzelgeneratoren aufzuteilen. Wenn auch hier Überlegungen
der Kostenverhältnisse und dergleichen nicht berührt
werden sollen, steht außer Zweifel, daß in flächenhaft
ausgedehnten, räumlich jedoch nur sehr dünn besiedelten
Gebieten die Verwendung von absolut betriebszuverlässigen Windkraftanlagen von entscheidener Bedeutung
für das Funktionieren von ganzen Übetragungssystemen,
Richtfunkketten, Hochfrequenzumsetzern und ähnlichem sein
kann, wobei die zusätzliche Forderung gestellt werden
muß, daß die betreffenden Anlagen ohne jede Betriebskontrolle selbsttätig über längere Zeiträume wartungsfrei

0030357

und betriebssicher arbeiten können müssen. Auch bei den bisher bekanntgewordenen kleineren Windkraftanlagen müssen in dieser Hinsicht Bedenken offen bleiben. Die Verwendung von Getrieben, von kompliziert geformten räumlichen Antriebselementen und dergleichen läßt eine Sicherheit des Betriebes unter härteren Umweltbedingungen, beispielsweise in Wüstenbereichen nicht als gewährleistbar erscheinen.

Zur Ausschaltung der Windrichtungskompensation durch Nachführung des Propellerrades senkrecht zur Windrichtung, welche die bereits erwähnten Kreiselmomente mit sich bringt, wäre zunächst an ein richtungsunabhängig wirkendes Propellersystem mit vertikaler Achse, etwa im Sinne des bekannten Darreius-Rotors zu denken. Einrichtungen dieser Art weisen jedoch den Nachteil auf, nicht selbsttätig anzulaufen und erfordern daher Anlaufhilfseinrichtungen, die ihrer Natur nach auf die Betriebssicherheit schädigend rückwirken.

Die Erfindung hat sich die Aufgabe gestellt, eine Einrichtung zu schaffen, die gegenüber den bisher bekannten bei einfachster Bauweise die Vorteile einer fast absoluten Betriebssicherheit mit bestem Wirkungsgrad, Wartungsfreiheit und kompakter Bauweise aufweist.

Die Erfindung besteht darin, daß der Savonius-Rotor mit einer Vertikalachse versehen ist und mindestens in einem Teil seines Gesamtvolumens als Läufer einer magnetelektrischen Maschine ausgebildet ist.

Die Eigenheiten des vorbeschriebenen Rotors (Seite 918 a.a.O) bestehen im wesentlichen in seiner außergewöhnlichen mechanischen Stabilität, seinem einfachen Aufbau und in seiner großen nutzbaren Anströmfläche. Des weiteren ist sein Anlaufdrehmoment mit den elektrischen Eigenschaften der ihn belastenden Generatoren auf einfache Weise in Übereinstimmung zu bringen.

In einer vorteilhaften Ausbildungsform gemäß der Erfindung ist der Savonius-Rotor an seinem unteren Umfang mit radial angeordneten Dauermagneten versehen und stehen diesen Dauermagneten ortsfeste, mit ihrer Achse zur Drehachse des Rotors ausgerichtete Induktionsspulen gegenüber, deren Wicklungen über je einen jeder Induktionsspule zugeordneten Gleichrichter mit einer gemeinsamen Ringleitung verbunden sind.

Durch diese Anordnung wird zunächst erreicht, daß irgendwelche stromführenden Elemente zwischen dem Läufer des Generators und der Stromabnahmeeinrichtung vermieden werden. Die gesamte Beschaltung ist ortsfest und überdies ohne Schwierigkeiten auf dem den Rotor tragenden Bauelement, etwa einem Betonsockel, unterzubringen. Durch die Anwendung des Savonius-Prinzips besteht überdies keinerlei Abhängigkeit von der Windrichtung, so daß, wie bereits gesagt, das einzig bewegte Element im Gesamtaufbau der Savonius-Rotor ist. Es wird unmittelbar deutlich, daß der beschriebene Aufbau betriebssicher und vor allem fast völlig wartungsfrei über einen langen Zeitraum funktionstüchtig bleiben kann.

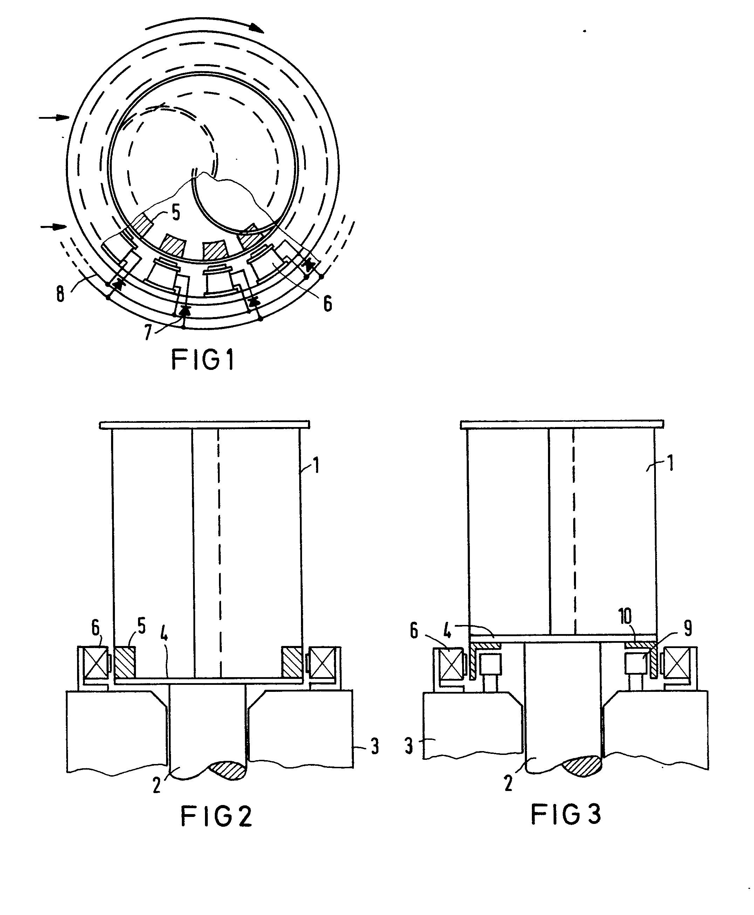

In der Zeichnung ist ein Ausführungsbeispiel einer derartigen Einrichtung in den FIG 1 und 2 dargestellt. Der Savonius-Rotor 1 ist mit seiner Achse 2 über in der Zeichnung nicht dargestellte, vorzugsweise dauergeschmierte Lager mit dem tragenden Teil 3 verbunden und an seiner unteren Begrenzungsplatte 4 mit den radial orientierten Erregermagneten 5 versehen, welche sich an den Induktionsspulen 6 vorbeibewegen, die gleichfalls am Tragelement 3 fest angeordnet sind. Die Ausgänge der Wicklungen der Induktionsspulen 6 sind über Gleichrichter 7 gleichpolig mit der Ringleitung 8 verbunden.

Die Wirkungsweise der Anordnung erfolgt unmittelbar aus dem Gesagten und der Zeichnung. Der Anwendungsbereich dieser erfindungsgemäßen Einrichtungen umfaßt naturgemäß eine große Anzahl von Einsatzmöglichkeiten, so zum Beispiel den Betrieb von Weitverkehrs-Relaisstationen, Fernsehumsetzern, meteorologischen unbemannten Meßstationen, Wasserstandsmessern in Küstennähe, Hüttenversorgung im Gebirge usw.

Das Gleiche gilt für die in FIG 3 dargestellte erfindungsgemäße Einrichtung, bei welcher der Savonius-Rotor an seinem unteren Umfang mit einem ihn ringförmig umgebenden koaxialzylindrischen Kupferkragen versehen ist, welcher im Feldbereich ortsfester radialer Dauermagnete als Kurzschlußläufer gegenüber gleichfalls ortsfesten Induktionsspulen drehbar angeordnet ist. In FIG 3 ist der Savonius-Rotor mit 1 bezeichnet, die Drehachse mit 2, der Träger mit 3, die Begrenzungsplatte mit 4, die Radialmagnete mit 9, der Kupferkragen mit 10, die Induktionsspulen mit 6. Die elektrische Verbindung der Wicklungen der Induktionsspulen entspricht jener der FIG 1 und ist in FIG 3 nicht gesondert dargestellt.

Eine Weiterbildung der Erfindung kann darin bestehen, daß die Zahl der Dauermagnete mindestens gleich ist der Zahl der Induktionsspulen, sie kann aber auch diese Zahl überschreiten, um die Welligkeit des erzeugten Gleichstroms zu verringern.

0030357

VPA 79 P 9641 EUR

Patentansprüche

1. Windkraftrad-Stromgenerator mit Savonius-Rotor, d a d u r c h  g e k e n n z e i c h n e t , daß der Savonius-Rotor (1) mit einer Vertikalachse (2) versehen ist und mindestens in einem Teil seines Gesamtvolumens als Läufer einer magnetelektrische Maschine ausgebildet ist.

2. Windkraftrad-Stromgenerator, d a d u r c h  g e - k e n n z e i c h n e t , daß der Savonius-Rotor (1) an seinem unteren Umfang (4) mit radial angeordneten Dauermagneten (5) versehen ist und daß diesen Dauermagneten (5) ortsfeste, mit ihrer Achse zur Drehachse des Rotors (1) ausgerichtete Induktionsspulen (6) gegenüberstehen, deren Wicklungen über je einen jeder Induktionsspule (6) zugeordneten Gleichrichter (7) mit einer gemeinsamen Ringleitung (8) verbunden sind.

3. Windkraftrad-Stromgenerator, d a d u r c h  g e - k e n n z e i c h n e t , daß die Zahl der Dauermagnete (5, 9) mindestens gleich ist der Zahl der Induktionsspulen (6).

4. Windkraftrad-Stromgenerator, nach Anspruch 1 und 2, d a d u r c h  g e k e n n z e i c h n e t , daß der Savonius-Rotor (1) an seinem unteren Umfang (4) mit einem ihn ringförmig umgebenden, koaxial zylindrischen Kupferkragen (10) versehen ist, welcher im Feldbereich ortsfester radialer Dauermagnete (9) als Kurzschlußläufer gegenüber gleichfalls ortsfesten Induktionsspulen (6) drehbar angeordnet ist.

0030357

FIG 1

FIG 2

FIG 3